# EUROPEAN PATENT APPLICATION

(11) **EP 4 300 963 A1**
(43) Date of publication of application: **03.01.2024**
(21) Application number: 22780872.2
(22) Date of filing: 29.03.2022
(51) Int. Cl.: H04N 19/46

(54) **IMAGE ENCODING METHOD, IMAGE DECODING METHOD, IMAGE PROCESSING METHOD, IMAGE ENCODING DEVICE, AND IMAGE DECODING DEVICE**

(30) Priority: 30.03.2021 US 202163167789 P; 23.04.2021 US 202163178798 P
(71) Applicant: Panasonic Intellectual Property Corporation of America, Torrance, CA 90504 (US)
(72) Inventor: TEO, Han Boon, Singapore 469332 (SG); LIM, Chong Soon, Singapore 469332 (SG); WANG, Chu Tong, Singapore 469332 (SG); TOMA, Tadamasa, Kadoma-shi Osaka 571-0057 (JP)
(74) Representative: Grünecker Patent- und Rechtsanwälte PartG mbB
(86) International application number: PCT/JP2022/015319
(87) International publication number: WO 2022/210661

(57) **Abstract**

An image encoding device encodes an image to generate a bitstream, adds, to the bitstream, one or more parameters that are not used for encoding the image, transmits, to an image decoding device, the bitstream to which the one or more parameters have been added, and outputs the image and the one or more parameters to a first processing device that executes predetermined task processing.

## Description

### Technical Field

The present invention relates to an image encoding method, an image decoding method, an image processing method, an image encoding device, and an image decoding device.

### Background Art

For example, as disclosed in Patent Literatures 1 and 2, a conventional image encoding system architecture includes a camera or a sensor that captures an image, an encoder that encodes the captured image to a bitstream, a decoder that decodes the image from the bitstream, and a display device that displays the image for human determination. Since the advent of machine learning or neural network-based applications, machines are rapidly replacing humans in determining images because machines outperform humans in scalability, efficiency, and accuracy.

Machines tend to work well only in situations where they are trained. If environment information partially changes on a camera side, the performance of the machines deteriorates, detection accuracy deteriorates, and thus poor determinations occur. In a case where environment information has been taught to machines, the machines can be customized to accommodate changes for achieving better detection accuracy.

### Citation List

### Patent Literature

Patent Literature 1: US 2010/0046635
Patent Literature 2: US 2021/0027470

### Summary of Invention

An object of the present disclosure is to improve the accuracy of task processing.

An image encoding method according to one aspect of the present disclosure includes: by an image encoding device, encoding an image and generating a bitstream, adding, to the bitstream, one or more parameters that not used for encoding the image, transmitting, to an image decoding device, the bitstream to which the one or more parameters have been added, and outputting the image and the one or more parameters to a first processing device that executes predetermined task processing.

### Brief Description of Drawings

FIG. 1 is a flowchart illustrating processing of an image encoding method according to a first embodiment of the present disclosure.
FIG. 2 is a flowchart illustrating processing of an image decoding method according to the first embodiment of the present disclosure.
FIG. 3 is a flowchart illustrating processing of the image encoding method according to the first embodiment of the present disclosure.
FIG. 4 is a flowchart illustrating processing of the image decoding method according to the first embodiment of the present disclosure.
FIG. 5 is a block diagram illustrating a configuration of an encoder according to the first embodiment of the present disclosure.
FIG. 6 is a block diagram illustrating a configuration of a decoder according to the first embodiment of the present disclosure.
FIG. 7 is a block diagram illustrating a configuration example of an image encoding device according to the first embodiment of the present disclosure.
FIG. 8 is a block diagram illustrating a configuration example of an image decoding device according to the first embodiment of the present disclosure.
FIG. 9 is a diagram illustrating a configuration example of an image processing system of the background art.
FIG. 10 is a diagram illustrating a first configuration example of an image processing system of the present disclosure.
FIG. 11 is a diagram illustrating a second configuration example of the image processing system of the present disclosure.
FIG. 12 is a diagram illustrating an example of camera characteristics regarding a mounting position of a fixed camera.
FIG. 13 is a diagram illustrating an example of camera characteristics regarding the mounting position of the fixed camera.
FIG. 14 is a diagram illustrating an example of a neural network task.
FIG. 15 is a diagram illustrating an example of the neural network task.
FIG. 16 is a flowchart illustrating exemplary processing for determining a size of an object.
FIG. 17 is a flowchart illustrating exemplary processing for determining a depth of an object.
FIG. 18 is a diagram illustrating an example of calculating the depth and the size of an object.
FIG. 19 is a flowchart illustrating processing of a first utilization example of one or more parameters.
FIG. 20 is a flowchart illustrating processing of a second utilization example of one or more parameters.
FIG. 21 is a flowchart illustrating processing of a third utilization example of one or more parameters.
FIG. 22 is a flowchart illustrating processing of a fourth utilization example of one or more parameters.
FIG. 23 is a flowchart illustrating processing of a fifth utilization example of one or more parameters.
FIG. 24 is a flowchart illustrating processing of a sixth utilization example of one or more parameters.
FIG. 25 is a flowchart illustrating processing of a seventh utilization example of one or more parameters.
FIG. 26 is a flowchart illustrating processing of an eighth utilization example of one or more parameters.
FIG. 27 is a diagram illustrating an example of camera characteristics regarding a camera mounted on a moving body.
FIG. 28 is a diagram illustrating an example of the camera characteristics regarding the camera mounted on the moving body.
FIG. 29 is a flowchart illustrating processing of an image decoding method according to a second embodiment of the present disclosure.
FIG. 30 is a flowchart illustrating processing of an image encoding method according to the second embodiment of the present disclosure.
FIG. 31 is a block diagram illustrating a configuration example of a decoder according to second embodiment of the present disclosure.
FIG. 32 is a block diagram illustrating a configuration example of an encoder according to the second embodiment of the present disclosure.
FIG. 33 is a diagram illustrating comparison between output images from a normal camera and a camera with great distortion.
FIG. 34 is a diagram illustrating an example of boundary information.
FIG. 35 is a diagram illustrating an example of the boundary information.
FIG. 36 is a diagram illustrating an example of the boundary information.
FIG. 37 is a diagram illustrating an example of the boundary information.

### Description of Embodiments

### (Knowledge Underlying Present Disclosure)

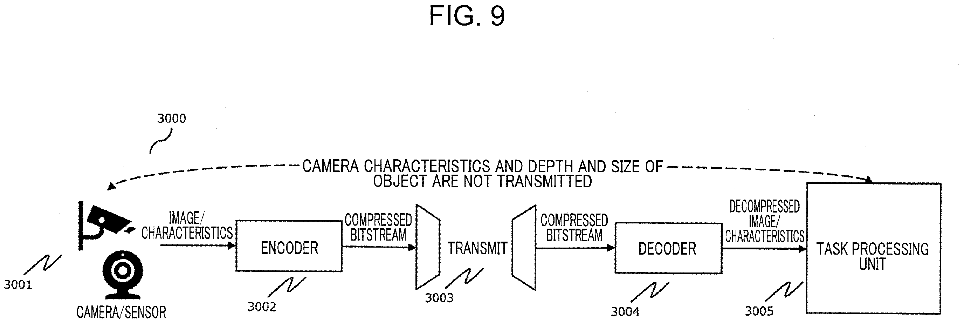

FIG. 9 is a diagram illustrating a configuration example of an image processing system 3000 of the background art. The encoder 3002 receives a signal of an image or characteristics from a camera or a sensor 3001, encodes the signal, and outputs a compressed bitstream. The compressed bitstream is transmitted from the encoder 3002 to a decoder 3004 via a communication network 3003. The decoder 3004 receives the compressed bitstream, decodes the bitstream, and inputs the signal of the decompressed image or characteristics to a task processing unit 3005. In the background art, information about the characteristics of the camera, the size of the object, and the depth of the object is not transmitted from the encoder 3002 to the decoder 3004.

A problem of the above-described background art is that the encoder 3002 does not transmit information necessary for improving the accuracy of task processing to the decoder 3004. The encoder 3002 transmits this information to the decoder 3004, thus providing important data related to an environment of an application or the like that can be used for improving the accuracy of the task processing, from the decoder 3004 to the task processing unit 3005. This information may include the camera characteristics, the size of the object included in the image, or the depth of the object included in the image. The camera characteristics may include a mounting height of the camera, a tilt angle of the camera, a distance from the camera to a region of interest (ROI), a visual field of the camera, or any combination thereof. The size of the object may be calculated from the width and height of the object in the image, or may be estimated by executing a computer vision algorithm. The size of the object may be used to estimate the distance between the object and the camera. The depth of the object may be obtained by using a stereo camera or running the computer vision algorithm. The depth of the object may be used to estimate the distance between the object and the camera.

In order to solve the problems with the background art, the present inventor has introduced a new method for signalizing the camera characteristics, the size of an object contained in an image, the depth of the object contained in the image, or any combination thereof. The concept is to transmit important information to a neural network to make the neural network adaptable with an environment from which the image or characteristics are originated. One or more parameters indicating this important information are encoded together with the image or stored in a header of the bitstream, and are added to the bitstream. The header may be a video parameter set (VPS), a sequence parameter set (SPS), a picture parameter set (PPS), a picture header (PH), a slice header (SH), or a supplemental enhancement information (SEI). One or more parameters may be signalized in a system layer of the bitstream. What is important in this solution is that the transmitted information is intended to improve the accuracy of determination and the like in the task processing including the neural network.

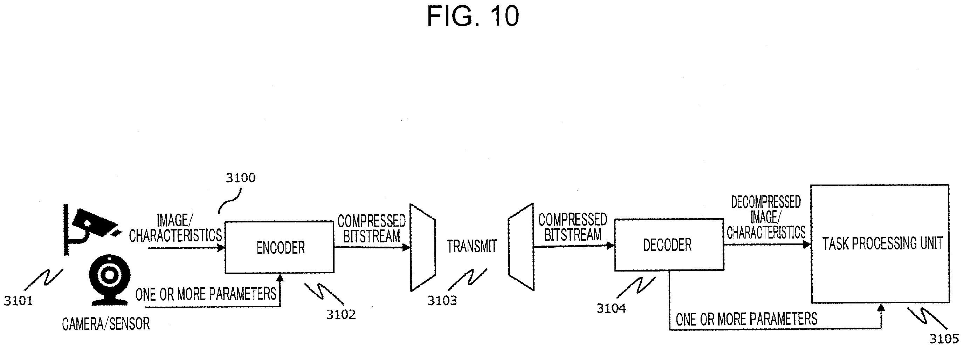

FIG. 10 is a diagram illustrating a first configuration example of an image processing system 3100 of the present disclosure. An encoder 3102 (image encoding device) receives a signal of an image or characteristics from a camera or a sensor 3101, encodes the signal, and generates a compressed bitstream. Furthermore, the encoder 3102 inputs one or more parameters from the camera or the sensor 3101, and adds the one or more parameters to the bitstream. The compressed bitstream to which the one or more parameters have been added is transmitted from the encoder 3102 to a decoder 3104 (image decoding device) via a communication network 3103. The decoder 3104 receives the compressed bitstream, decodes the bitstream, and inputs the signal of the decompressed image or characteristics and the one or more parameters to a task processing unit 3105 that executes predetermined task processing.

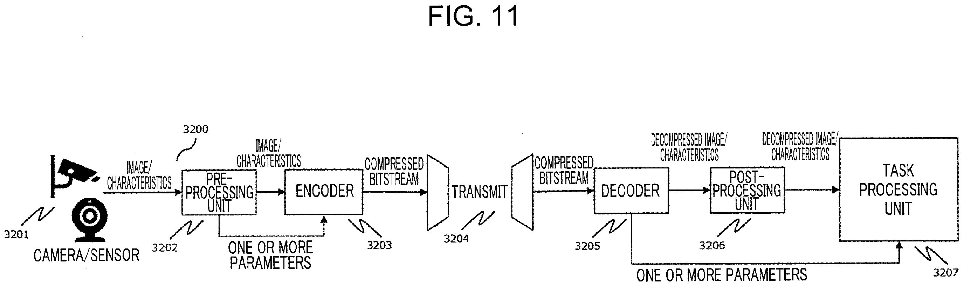

FIG. 11 is a diagram illustrating a second configuration example of an image processing system 3200 of the present disclosure. A pre-processing unit 3202 receives an image or characteristic signal from a camera or a sensor 3201, and outputs the pre-processed image or the characteristic signal and the one or more parameters. An encoder 3203 (image encoding device) receives an image or a characteristic signal from the pre-processing unit 3202, encodes the signal, and generates a compressed bitstream. Further, the encoder 3203 receives one or more parameters from the pre-processing unit 3202, and adds the one or more parameters to the bitstream. The compressed bitstream to which the one or more parameters have been added is transmitted from the encoder 3203 to a decoder 3205 (image decoding device) via a communication network 3204. The decoder 3205 receives the compressed bitstream, decodes the bitstream, inputs a decompressed image or a characteristic signal to a post-processing unit 3206, and inputs the one or more parameters to a task processing unit 3207 that executes predetermined task processing. The post-processing unit 3206 inputs the decompressed image or the characteristic signal that has been subject to post-processing to the task processing unit 3207.

In the task processing units 3105 and 3207, the information signalized as the one or more parameters can be used for changing a neural network model that is being used. For example, a complex or simple neural network model can be selected depending on the size of the object or the mounting height of the camera. The task processing may be executed by using the selected neural network model.

The information signalized as the one or more parameters can be used for changing parameters to be used for adjusting an estimated output from the neural network. For example, the signalized information may be used to set a detection threshold to be used for estimation. The task processing may be executed by using a new detection threshold for estimating the neural network.

The information signalized as the one or more parameters can be used for adjusting scaling of images to be input to the task processing units 3105 and 3207. For example, the signalized information is used for set the scaling size. The input images to the task processing units 3105 and 3207 are scaled to the set scaling size before the task processing units 3105 and 3207 execute the task processing.

Next, each aspect of the present disclosure will be described.

An image encoding method according to one aspect of the present disclosure includes: by an image encoding device, encoding an image to generate a bitstream, adding, to the bitstream, one or more parameters that are not used for encoding the image, transmitting, to an image decoding device, the bitstream to which the one or more parameters have been added, and outputting the image and the one or more parameters to a first processing device that executes predetermined task processing.

According to this aspect, the image encoding device transmits, to the image decoding device, the one or more parameters to be output to the first processing device for execution of the predetermined task processing. As a result, the image decoding device can output the one or more parameters received from the image encoding device to a second processing device that executes task processing which is same as the predetermined task processing. As a result, the second processing device executes the predetermined task processing based on the one or more parameters input from the image decoding device, thereby improving the accuracy of the task processing in the second processing device.

In the above aspect, the image decoding device receives the bitstream from the image encoding device, and outputs the image and the one or more parameters to the second processing device that executes the task processing which is same as the predetermined task processing.

According to this aspect, the second processing device executes the predetermined task processing based on the one or more parameters input from the image decoding device, thereby improving the accuracy of the task processing in the second processing device.

In the above aspect, when executing the predetermined task processing, the first processing device and the second processing device switch at least one of a machine learning model, a detection threshold, a scaling value, and a post-processing method based on the one or more parameters.

According to the this aspect, at least one of the machine learning model, the detection threshold value, the scaling value, and the post-processing method is switched based on the one or more parameters, thereby improving he accuracy of the task processing in the first processing device and the second processing device.

In the above aspect, the predetermined task processing includes at least one of object detection, object segmentation, object tracking, action recognition, pose estimation, pose tracking, and hybrid vision.

According to the aspect, the accuracy of each of the processing can be improved.

In the above aspect, the predetermined task processing includes image processing for improving image quality or image resolution.

According to this aspect, the accuracy of the image processing for improving image quality or image resolution can be improved.

In the above aspect, the image processing includes at least one of morphological transformation and edge enhancement processing for enhancing an object included in an image.

According to the aspect, the accuracy of each of the processing can be improved.

In the above aspect, the one or more parameters include at least one of a mounting height of a camera that outputs the image, a tilt angle of the camera, a distance from the camera to a region of interest, and a visual field of the camera.

According to this aspect, the accuracy of the task processing can be improved by allowing these pieces of information to be included in one or more parameters.

In the above aspect, the one or more parameters include at least one of the depth and the size of an object included in the image.

According to this aspect, the accuracy of the task processing can be improved by allowing these pieces of information to be included in one or more parameters.

In the above aspect, the one or more parameters include boundary information indicating a boundary surrounding an object included in the image, and distortion information indicating presence or absence of distortion in the image.

According to this aspect, the accuracy of the task processing can be improved by allowing these pieces of information to be included in one or more parameters.

In the above aspect, the boundary information includes position coordinates of a plurality of vertices related to a figure defining the boundary.

According to this aspect, even in a case where distortion occurs in the image, the boundary surrounding an object can be accurately defined.

In the above aspect, the boundary information includes center coordinates, width information, height information, and tilt information related to the figure defining the boundary.

According to this aspect, even in a case where distortion occurs in the image, the boundary surrounding an object can be accurately defined.

In the above aspect, the distortion information includes additional information indicating that the image is an image captured by a fisheye camera, a super-wide angle camera, or an omnidirectional camera.

According to the this aspect, a determination is easily made whether the fisheye camera, the super-wide angle camera, or the omnidirectional camera is used depending on whether the additional information is included in the one or more parameters.

An image decoding method according to one aspect of the present disclosure includes: by an image decoding device, receiving a bitstream from an image encoding device, decoding an image from the bitstream, obtaining, from the bitstream, one or more parameters that are not used for decoding the image, and outputs the image and the one or more parameters to a processing device that executes predetermined task processing.

According to this aspect, the image decoding device outputs, to the processing device that executes the predetermined task processing, the one or more parameters received from the image encoding device. As a result, the processing device executes the predetermined task processing based on the one or more parameters input from the image decoding device, thereby improving the accuracy of the task processing in the processing device.

An image processing method according to one aspect of the present disclosure includes: by an image decoding device, receiving, from an image encoding device, a bitstream including an encoded image and one or more parameters that are not used for encoding the image, obtaining the one or more parameters from the bitstream, and outputting the one or more parameters to a processing device that executes predetermined task processing.

According to this aspect, the image decoding device outputs, to the processing device that executes the predetermined task processing, the one or more parameters obtained from the bitstream received from the image encoding device. As a result, the processing device executes the predetermined task processing based on the one or more parameters input from the image decoding device, thereby improving the accuracy of the task processing in the processing device.

An image encoding device according to one aspect of the present disclosure encodes an image to generate a bitstream, adds, to the bitstream, one or more parameters that are not used for encoding the image, transmits, to an image decoding device, the bitstream to which the one or more parameters have been added, and outputs the image and the one or more parameters to a first processing device that executes predetermined task processing.

According to this aspect, the image encoding device transmits, to the image decoding device, the one or more parameters to be output to the first processing device for execution of the predetermined task processing. As a result, the image decoding device can output the one or more parameters received from the image encoding device to a second processing device that executes task processing which is same as the predetermined task processing. As a result, the second processing device executes the predetermined task processing based on the one or more parameters input from the image decoding device, thereby improving the accuracy of the task processing in the second processing device.

An image decoding device according to one aspect of the present disclosure receives a bitstream from an image encoding device, decodes an image from the bitstream, obtains, from the bitstream, one or more parameters that are not used for decoding the image, and outputs the image and the one or more parameters to a processing device that executes predetermined task processing.

According to this aspect, the image decoding device outputs, to the processing device that executes the predetermined task processing, the one or more parameters received from the image encoding device. As a result, the processing device executes the predetermined task processing based on the one or more parameters input from the image decoding device, thereby improving the accuracy of the task processing in the processing device.

### (Embodiments of Present Disclosure)

In the following, embodiments of the present disclosure will be described in detail with reference to the drawings. Elements denoted by the same corresponding reference numerals in different drawings represent the same or corresponding elements.

Each of the embodiments described below illustrates specific examples of the present disclosure. Numerical values, shapes, components, steps, order of steps, and the like shown in the following embodiments are merely examples, and are not intended to limit the present disclosure. The components in the embodiments below include a component that is not described in an independent claim representing the highest concept and that is described as an arbitrary component. All the embodiments have respective contents that can be combined.

### (First Embodiment)

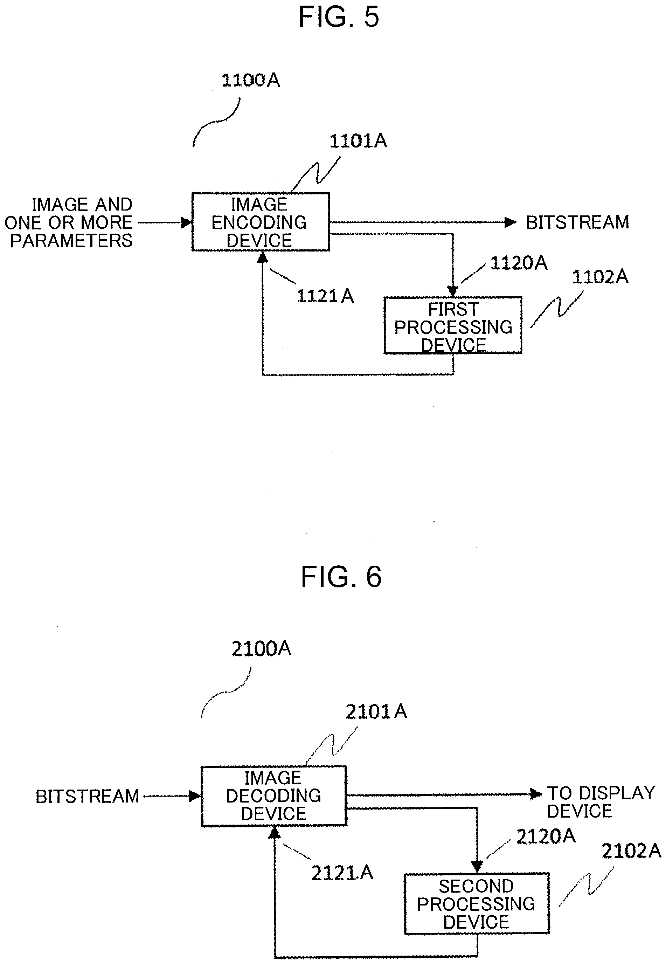

FIG. 5 is a block diagram illustrating a configuration of an encoder 1100A according to a first embodiment of the present disclosure. The encoder 1 100 A corresponds to the encoder 3102 illustrated in FIG. 10 or the encoder 3203 illustrated in FIG. 11. The encoder 1100A includes an image encoding device 1101A and a first processing device 1102A. However, the first processing device 11 02A may be mounted in the image encoding device 1101A as a part of the function of the image encoding device 1101A.

FIG. 6 is a block diagram illustrating a configuration of a decoder 2100A according to the first embodiment of the present disclosure. The decoder 2100A includes an image decoding device 2101A and a second processing device 2102A. However, the second processing device 2102A may be mounted in the image decoding device 2101A as a part of the function of the image decoding device 2101A. The image decoding device 2101A corresponds to the decoder 3104 illustrated in FIG. 10 or the decoder 3205 illustrated in FIG. 11. The second processing device 2102A corresponds to the task processing unit 3105 illustrated in FIG. 10 or the task processing unit 3207 illustrated in FIG. 11.

The image encoding device 1101A encodes an input image per block to generate a bitstream. Further, the image encoding device 1101A adds input one or more parameters to the bitstream.

The one or more parameters are not used for encoding the image. Further, the image encoding device 1101A transmits, to the image decoding device 2101A, the bitstream to which the one or more parameters have been added. Further, the image encoding device 1101A generates a pixel sample of the image, and outputs a signal 1120A including the pixel sample of the image and the one or more parameters to the first processing device 1102A. The first processing device 1102A executes predetermined task processing such as a neural network task based on the signal 1120A input from the image encoding device 1101A. The first processing device 1102A may input a signal 1121A obtained as a result of executing the predetermined task processing to the image encoding device 1101A.

The image decoding device 2101A receives the bitstream from the image encoding device 1101A. The image decoding device 2101A decodes the image from the received bitstream, and outputs the decoded image to a display device. The display device displays the image. In addition, the image decoding device 2101A acquires one or more parameters from the received bitstream. The one or more parameters are not used for decoding the image. Further, the image decoding device 2101A generates a pixel sample of the image, and outputs a signal 2120A including the pixel sample of the image and the one or more parameters to the second processing device 2102A. The second processing device 2102A executes predetermined task processing which is same as that in the first processing device 1102A based on the signal 2120A input from the image decoding device 2101A. The second processing device 2102A may input a signal 2121A obtained as a result of executing the predetermined task processing to the image decoding device 2101A.

### (Processing on Encoder Side)

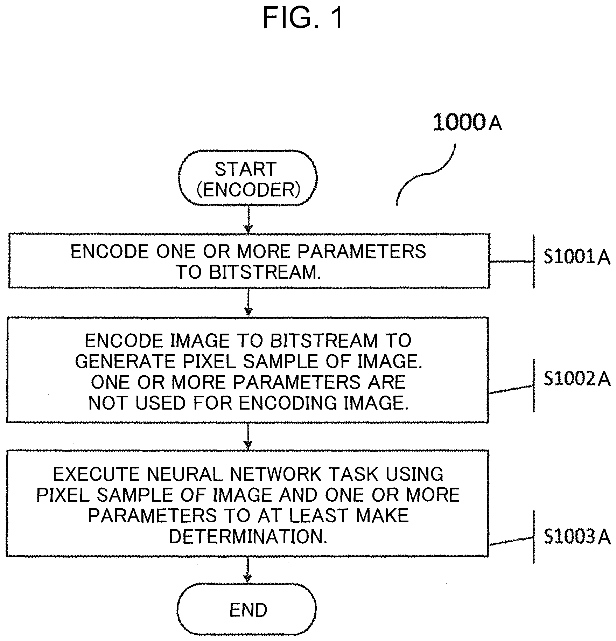

FIG. 1 is a flowchart illustrating processing 1000A of the image encoding method according to the first embodiment of the present disclosure. In a first step S1001A, the image encoding device 1101A encodes one or more parameters into a bitstream. An example of the one or more parameters is parameters indicating camera characteristics. The parameters indicating the camera characteristics include, but are not limited to, a mounting height of the camera, an angle of squint of the camera, a distance from the camera to a region of interest, a tilt angle of the camera, a visual field of the camera, an orthographic size of the camera, near/far clipping plane of the camera, and image quality of the camera. The one or more parameters may be encoded to be added to the bitstream, or may be stored in a header of the bitstream to be added to the bitstream. The header may be VPS, SPS, PPS, PH, SH, or SEI. The one or more parameters may be added to a system layer of the bitstream.

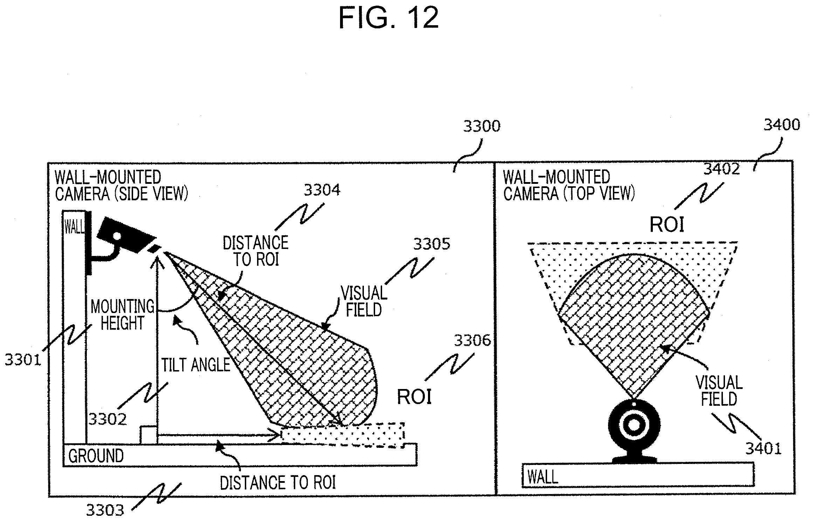

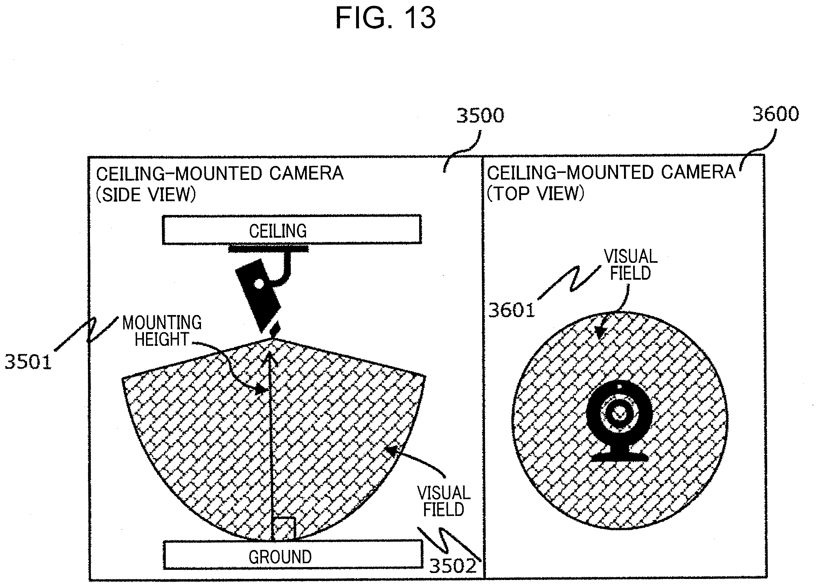

FIGS. 12 and 13 are diagrams illustrating examples of the camera characteristics regarding a mounting position of a fixed camera. The camera characteristics may be predefined for the camera. FIG. 12 illustrates a side view 3300 and a top view 3400 of a wall-mounted camera. FIG. 13 illustrates a side view 3500 and a top view 3600 of a ceiling-mounted camera.

As illustrated in FIG. 12, the mounting height 3301 of the camera is a vertical distance from the ground to the camera. A tilt angle 3302 of the camera is a tilt angle of an optical axis of the camera with respect to the vertical direction. The distance from the camera to a region of interest (ROI) 3306 includes at least one of a distance 3303 and a distance 3304. The distance 3303 is a horizontal distance from the camera to the region of interest 3306. The distance 3304 is a distance from the camera to the region of interest 3306 in an optical axis direction. The visual field 3305 of the camera is a vertical angle of view centered on the optical axis toward the region of interest 3306. As illustrated in FIG. 13, the visual field 3401 of the camera is a horizontal angle of view centered on the optical axis toward the region of interest 3402.

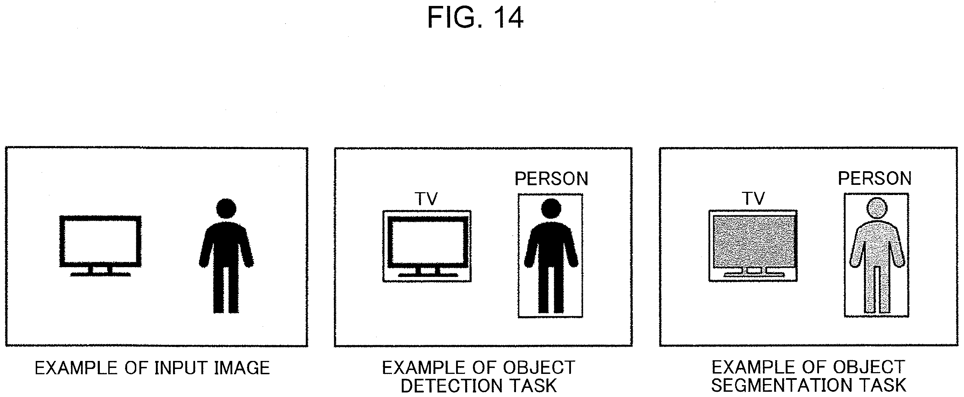

As illustrated in FIG. 13, the mounting height 3501 of the camera is a vertical distance from the ground to the camera. The visual field 3502 of the camera is a vertical angle centered on the optical axis toward the region of interest. As illustrated in FIG. 14, the visual field 3601 of the camera is a horizontal angle centered on the optical axis toward the region of interest.

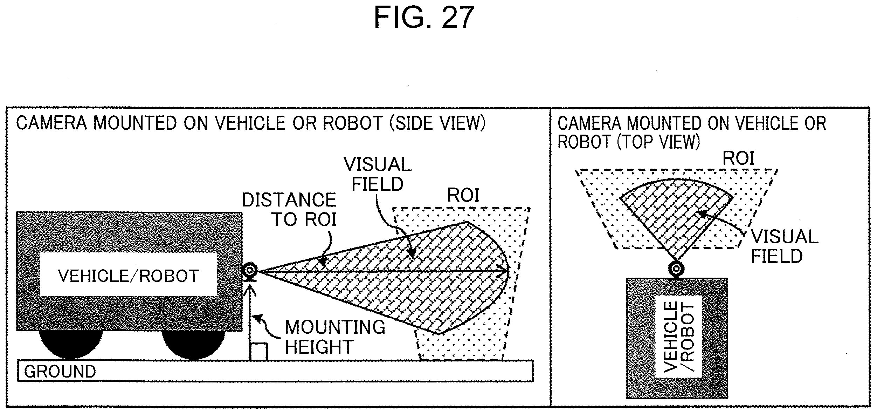

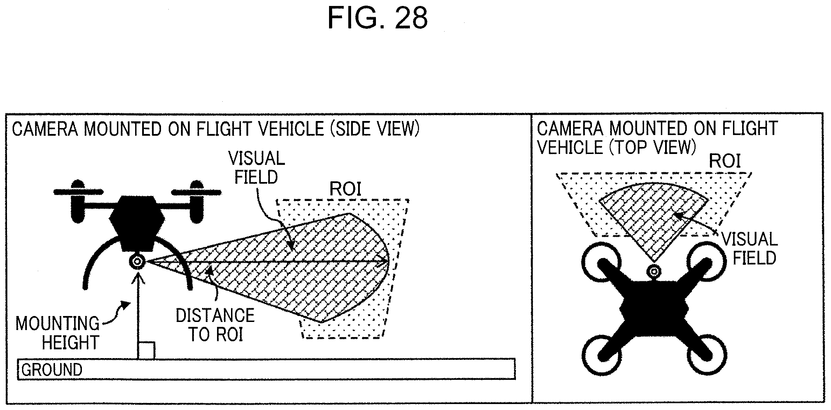

FIGS. 27 and 28 are diagrams illustrating examples of the camera characteristics regarding the camera mounted on a moving body. FIG. 27 is a side view and a top view of the camera mounted on a vehicle or a robot. FIG. 28 is a side view and a top view of the camera mounted on a flight vehicle. The camera can be mounted on a vehicle, a robot, or a flight vehicle. For example, the camera can be mounted on a car, a bus, a truck, a wheeled robot, a legged robot, a robot arm, a drone, or an unmanned aerial vehicle.

As illustrated in FIG. 27, the mounting height of the camera is a vertical distance from the ground to the camera. A distance from the camera to a region of interest is a distance from the camera to the region of interest in an optical axis direction. The visual field of the camera is an angles of view in the vertical and horizontal directions centered on the optical axis toward a region of interest.

As illustrated in FIG. 28, the mounting height of the camera is a vertical distance from the ground to the camera. A distance from the camera to a region of interest is a distance from the camera to the region of interest in the optical axis direction. The visual field of the camera is an angle of view in the vertical and horizontal directions centered on the optical axis toward the region of interest.

The camera characteristics may be dynamically updated via another sensor mounted on the moving body. In a case of the camera mounted on a vehicle, the distance from the camera to the region of interest may be changed depending on a driving situation such as driving on a highway or driving in town. For example, a braking distance is different between driving on a highway and driving in town due to a difference in vehicle speed. Specifically, since the braking distance becomes long during high-speed driving on a highway, a farther object have to be found. On the other hand, since the braking distance becomes short during normal-speed driving in town, a relatively nearby object may be found. Actually, switching a focal length changes the distance from the camera to the ROI. For example, the distance from the camera to the ROI is increased by increasing the focal length. In the case of the camera mounted on a flight vehicle, the mounting height of the camera may be changed based on the flight altitude of the flight vehicle. In the case of the camera mounted on a robot arm, the distance from the camera to the region of interest may be changed depending on a movement of the robot arm.

As another example, the one or more parameters include at least one of the depth and the size of an object included in the image.

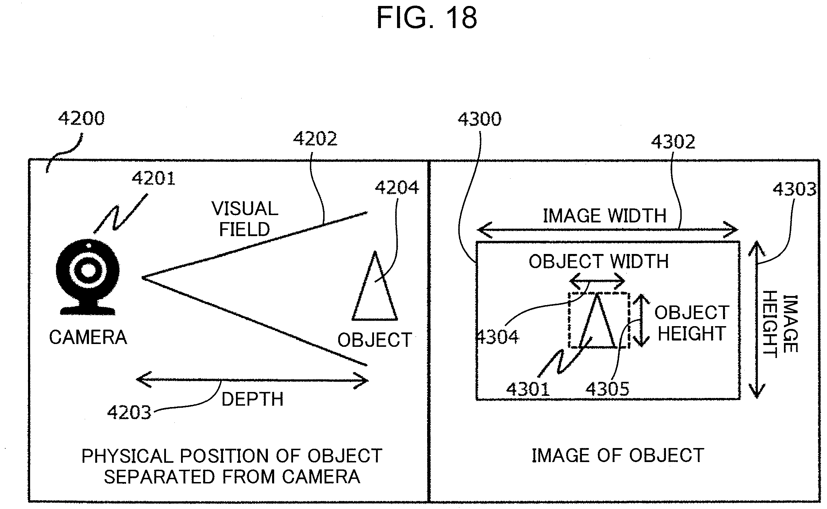

FIG. 18 is a diagram illustrating an example of calculating the depth and the size of an object. In the side view 4200, an object 4204 is located at a place physically separated from a camera 4201 and is contained within a visual field 4202 of the camera 4201. The separation distance between the camera 4201 and the object 4204, that is, the depth corresponds to a depth 4203 of the object 4204. An image 4300 captured by the camera 4201 includes an object 4301 corresponding to the object 4204. The image 4300 has a horizontal width 4302 and a vertical height 4303, and the object 4301 included in the image 4300 has a horizontal width 4304 and a vertical height 4305.

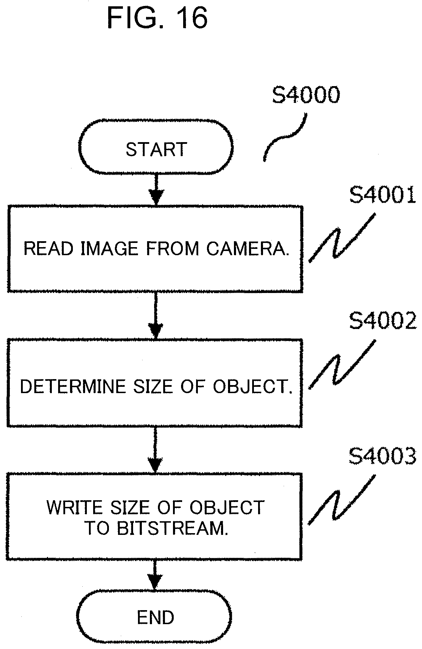

FIG. 16 is a flowchart illustrating exemplary processing S4000 for determining the size of an object. In step S4001, the image 4300 is read from the camera 4201. In step S4002, the size of the object 4204 (for example, the horizontal width and the vertical height) is calculated based on the width 4304 and the height 4305 of the object 4301 included in the image 4300. Alternatively, the size of the object 4204 may be estimated by executing a computer vision algorithm on the image 4300. The size of the object 4204 may be used to estimate the distance between the object 4204 and the camera 4201. In step S4003, the size of the object 4204 is written in a bitstream obtained by encoding the image 4300 as one of the one or more parameters related to the object 4301 included in the image 4300.

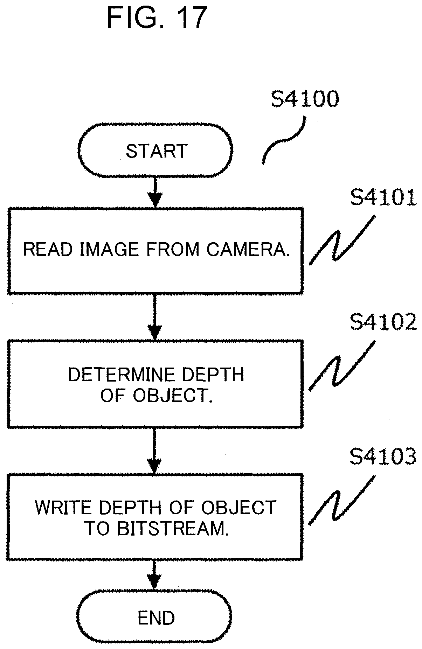

FIG. 17 is a flowchart illustrating exemplary processing S4100 for determining the depth of an object. In step S4101, the image 4300 is read from the camera 4201. In step S4102, the depth 4203 of the object 4204 is determined by using a stereo camera or by executing the computer vision algorithm on the image 4300. The distance between the object 4204 and the camera 4201 can be estimated based on the depth 4203 of the object 4204. In step S4103, the depth 4203 of the object 4204 is written in the bitstream obtained by encoding the image 4300 as one of the one or more parameters related to the object 4301 included in the image 4300.

With reference to FIG. 1, next in step S1002A, the image encoding device 1101A encodes an image to generate a bitstream, and generates a pixel sample of the image. The one or more parameters are not used for encoding the image here. The image encoding device 1101A adds the one or more parameters to the bitstream, and transmits, to the image decoding device 2101A, the bitstream to which the one or more parameters have been added.

In a final step S1003A, the image encoding device 1101A outputs the signal 1120A including the pixel sample of the image and the one or more parameters to the first processing device 1102A.

The first processing device 1102A executes predetermined task processing such as a neural network task using the pixel sample of the image and the one or more parameters included in the input signal 1120A. In the neural network task, at least one determination processing may be executed. An example of the neural network is a convolutional neural network. An example of the neural network task is object detection, object segmentation, object tracking, action recognition, pose estimation, pose tracking, machine and human hybrid vision, or any combination thereof.

FIG. 14 is a diagram illustrating object detection and object segmentation as examples of the neural network task. In the object detection, attributes (in this example, a television and a person) of an object included in an input image are detected. In addition to the attributes of the object included in the input image, the position and the number of objects in the input image may be detected. As a result, for example, the position of the object to be recognized may be narrowed down, or objects other than the object to be recognized may be excluded. As a specific application, for example, detection of a face in the camera or detection of a pedestrian or the like in automatic driving is considered. In the object segmentation, pixels in an area corresponding to an object are segmented (that is, separated). As a result, for example, there are conceivable applications such as separating an obstacle and a road in automatic driving to assist safe running of an automobile, detecting a defect of a product in a factory, and identifying a topography in a satellite image.

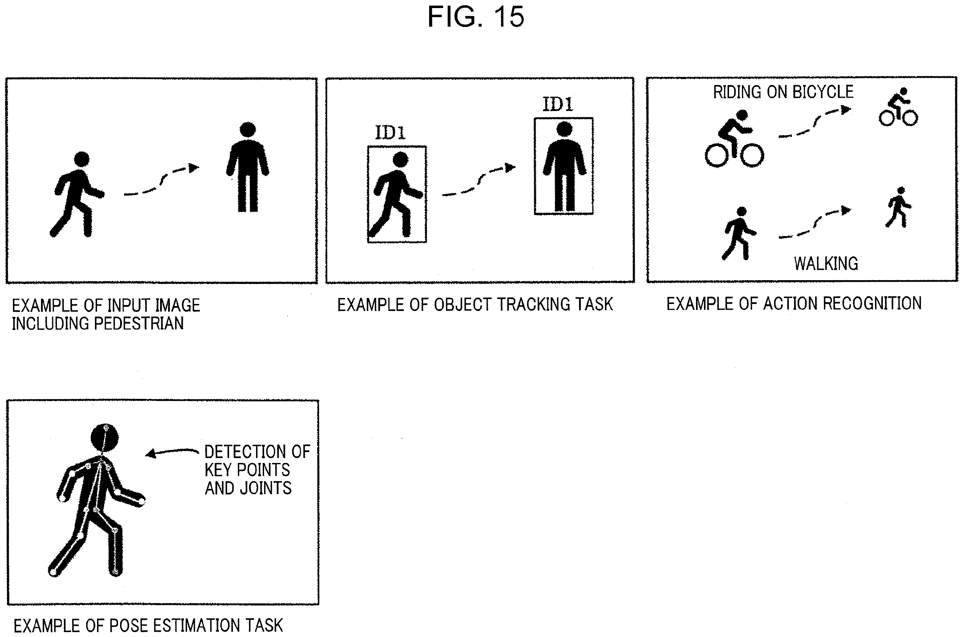

FIG. 15 is a diagram illustrating object tracking, action recognition, and pose estimation as examples of the neural network task. In the object tracking, movement of an object included in an input image is tracked. As an application, for example, counting of the number of users of a facility such as a store or analysis of movement of an athlete can be considered. If the processing speed is further heightened, an object can be tracked in real time, thereby enabling the application to camera processing such as autofocus. In the action recognition, the type of the motion of the object (in this example, "riding on bicycle" or" walking") is detected. For example, use as a security camera enables applications such as prevention and detection of criminal behaviors such as burglary and shoplifting, and prevention of forgetting to do work in a factory. In the pose estimation, a pose of the object is detected by detecting key points and joints. For example, there are conceivable utilizations in an industrial field such as improvement of work efficiency in a factory, in a security field such as detection of an abnormal behavior, and in healthcare and sports fields.

The first processing device 1102A outputs a signal 1121A indicating the execution result of the neural network task. The signal 1121A may include at least one of a number of detected objects, a confidence level of the detected objects, boundary information or position information about the detected objects, and classification categories of the detected objects. The signal 1121A may be input from the first processing device 11 02A to the image encoding device 1101A.

Hereinafter, utilization examples of the one or more parameters in the first processing device 1102A will be described.

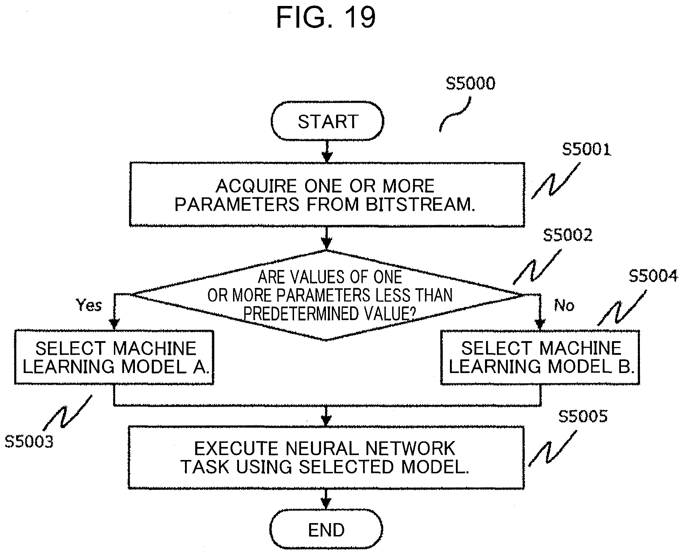

FIG. 19 is a flowchart illustrating processing S5000 of a first utilization example of the one or more parameters. In step S5001, the one or more parameters are acquired from the bitstream. In step S5002, the first processing device 1102A determines whether values of the one or more parameters are less than a predetermined value. In a case where a determination is made that the values of the one or more parameters are less than the predetermined value (Yes in S5002), the first processing device 1102A selects a machine learning model A in step S5003. In a case where the determination is made that the values of the one or more parameters are the predetermined value or more (No in S5002), the first processing device 1102A selects a machine learning model B in step S5004. In step S5005, the first processing device 1102A executes the neural network task using the selected machine learning model. The machine learning model A and the machine learning model B may be models trained by using different data sets or may include different neural network layer designs.

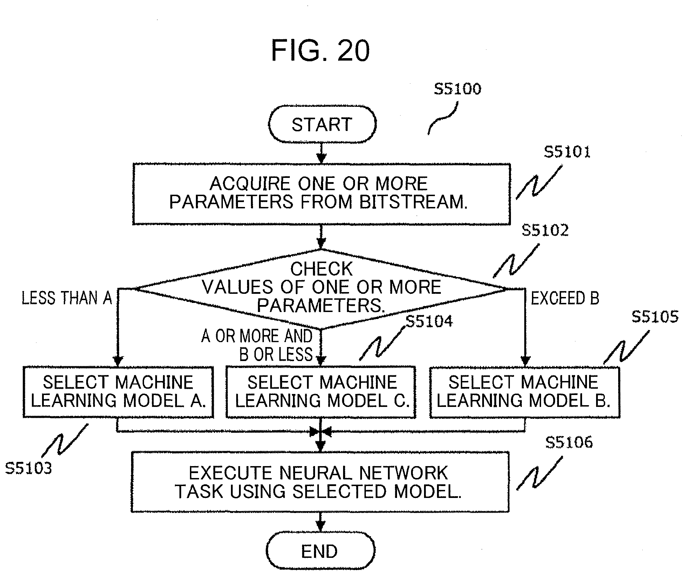

FIG. 20 is a flowchart illustrating processing S5100 of a second utilization example of the one or more parameters. In step S5101, the one or more parameters are acquired from the bitstream. In step S5102, the first processing device 1102A checks the values of the one or more parameters. In a case where the values of the one or more parameters are less than a predetermined value A, the first processing device 1102A selects the machine learning model A in step S5103. In a case where the values of the one or more parameters are exceed a predetermined value B, the first processing device 1102A selects the machine learning model B in step S5105. In a case where the values of the one or more parameters are the predetermined value A or more and the predetermined value B or less, the first processing device 1102A selects a machine learning model C in step S5104. In step S5106, the first processing device 1102A executes the neural network task using the selected machine learning model.

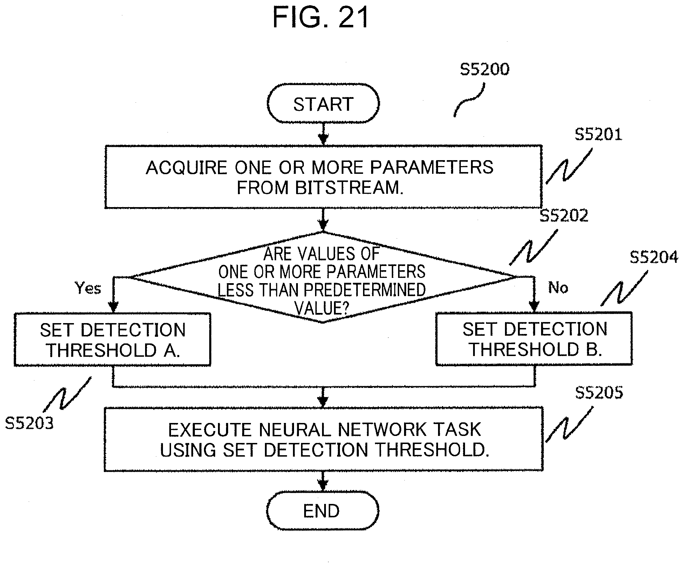

FIG. 21 is a flowchart illustrating processing S5200 of a third utilization example of the one or more parameters. In step S5201, the one or more parameters are acquired from the bitstream. In step S5202, the first processing device 1102A determines whether the values of the one or more parameters are less than a predetermined value. In a case where a determination is made that the values of the one or more parameters are less than the predetermined value (Yes in S5202), the first processing device 1102A sets a detection threshold A in step S5203. In a case where the determination is made that the values of the one or more parameters are the predetermined value or more (No in S5202), the first processing device 1102A sets a detection threshold B in step S5204. In step S5205, the first processing device 1102A executes the neural network task using the selected detection threshold. The detection threshold may be used for controlling an estimated output from the neural network. As an example, the detection threshold is used for comparison with a confidence level of the detected object. In a case where the confidence level of the detected object exceeds the detection threshold, the neural network outputs that confidence level.

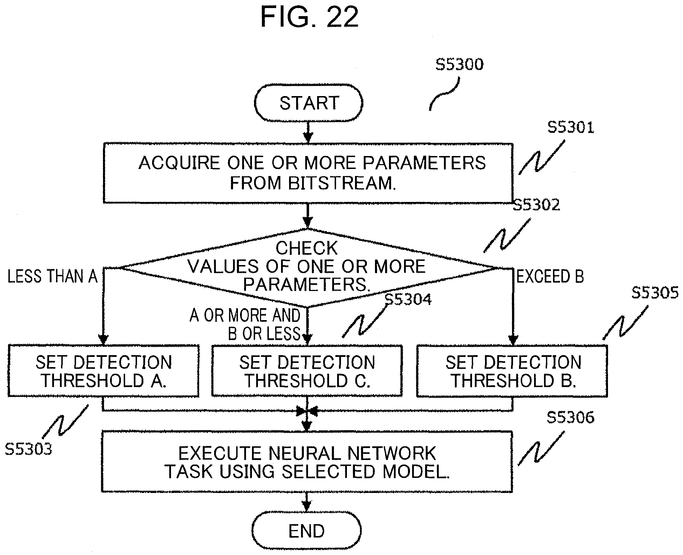

FIG. 22 is a flowchart illustrating processing S5300 of a fourth utilization example of the one or more parameters. In step S5301, the one or more parameters are acquired from the bitstream. In step S5302, the first processing device 1102A checks the values of the one or more parameters. In a case where the values of the one or more parameters are less than the predetermined value A, the first processing device 1102A sets the detection threshold A in step S5303. In a case where the values of the one or more parameters exceed the predetermined value B, the first processing device 1102A sets the detection threshold B in step S5305. In a case where the values of the one or more parameters are the predetermined value A or more and the predetermined value B or less, the first processing device 1102A sets a detection threshold C in step S5304. In step S5306, the first processing device 1102A executes the neural network task using the set detection threshold.

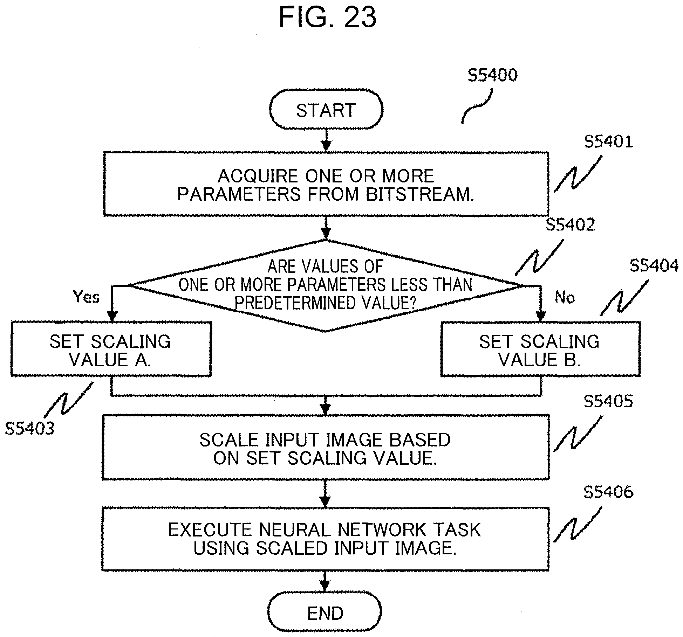

FIG. 23 is a flowchart illustrating processing S5400 of a fifth utilization example of the one or more parameters. In step S5401, the one or more parameters are acquired from the bitstream. In step S5402, the first processing device 1102A determines whether the values of the one or more parameters are less than a predetermined value. In a case where a determination is made that the values of the one or more parameters are less than the predetermined value (Yes in S5402), the first processing device 1102A sets a scaling value A in step S5403. In a case where the determination is made that the values of the one or more parameters are the predetermined value or more (No in S5402), the first processing device 1102A sets a scaling value B in step S5404. In step S5405, the first processing device 1102A scales the input image based on the set scaling value. As an example, the input image is scaled up or scaled down based on the set scaling value. In step S5406, the first processing device 1102A executes the neural network task using the scaled input image.

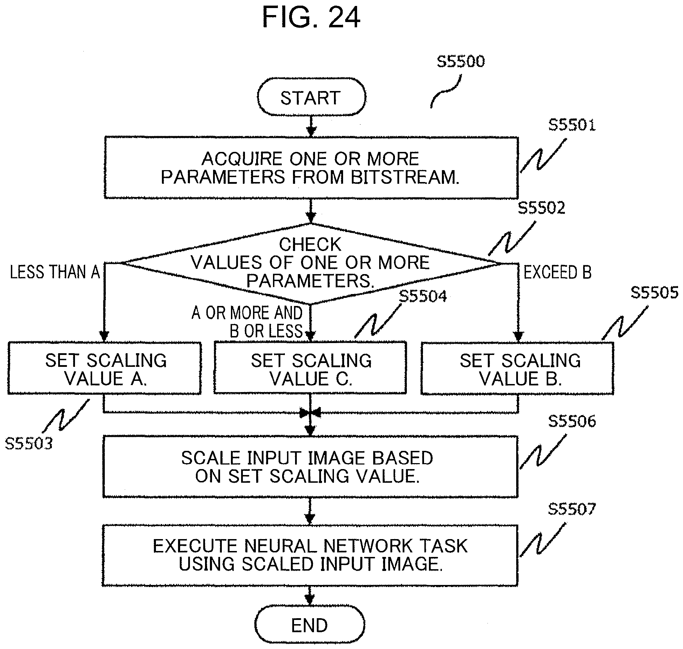

FIG. 24 is a flowchart illustrating processing S5500 of a sixth utilization example of the one or more parameters. In step S5501, the one or more parameters are acquired from the bitstream. In step S5502, the first processing device 1102A checks the values of the one or more parameters. In a case where the values of the one or more parameters are less than the predetermined value A, the first processing device 1102A sets the scaling value A in step S5503. In a case where the values of the one or more parameters exceed the predetermined value B, the first processing device 1102A sets the scaling value B in step S5505. In a case where the values of the one or more parameters are the predetermined value A or more and the predetermined value B or less, the first processing device 1102A sets a scaling value C in step S5504. In step S5506, the first processing device 1102A scales the input image based on the set scaling value. In step S5507, the first processing device 1102A executes the neural network task using the scaled input image.

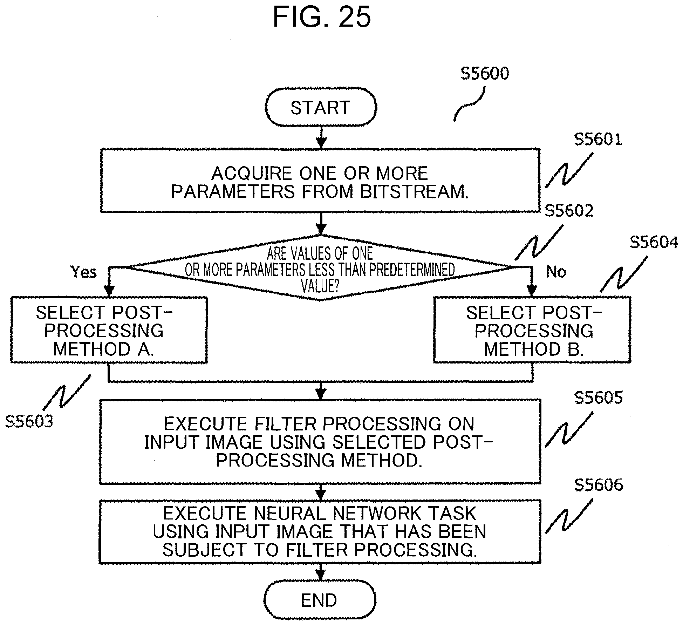

FIG. 25 is a flowchart illustrating processing S5600 of a seventh utilization example of the one or more parameters. In step S5601, the one or more parameters are acquired from the bitstream. In step S5602, the first processing device 1102A determines whether the values of the one or more parameters are less than a predetermined value. In a case where a determination is made that the values of the one or more parameters are less than the predetermined value (Yes in S5602), the first processing device 1102A selects a post-processing method A in step S5603. In a case where the determination is made that the values of the one or more parameters are the predetermined value or more (No in S5602), the first processing device 1102A selects a post-processing method B in step S5604. In step S5605, the first processing device 1102A executes filter processing for the input image using the selected post-processing method. The post-processing method may be sharpening, blurring, morphological transformation, unsharp masking, or any combination of image processing methods. In step S5606, the first processing device 1102A executes the neural network task using the input image that has been subject to the filter processing.

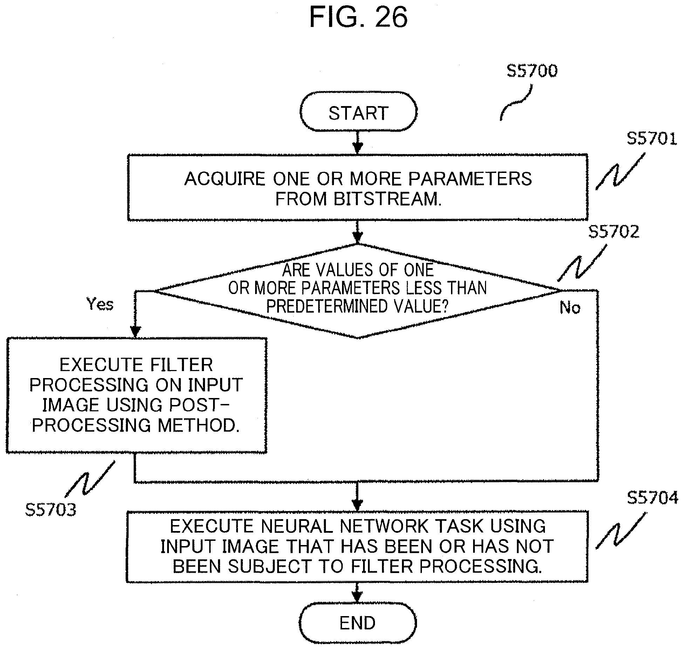

FIG. 26 is a flowchart illustrating processing S5700 of an eighth utilization example of the one or more parameters. In step S5701, the one or more parameters are acquired from the bitstream. In step S5702, the first processing device 1102A determines whether the values of the one or more parameters are less than a predetermined value. In a case where a determination is made that the values of the one or more parameters are less than the predetermined value (Yes in S5702), the first processing device 1102A executes filter processing on the input image using a predetermined post-processing method in step S5703. In a case where the determination is made that the values of the one or more parameters are the predetermined value or more (No in S5702), the first processing device 1102A does not execute the filter processing. In step S5704, the first processing device 1102A executes the neural network task using the input image that has been or has not been subject to the filter processing.

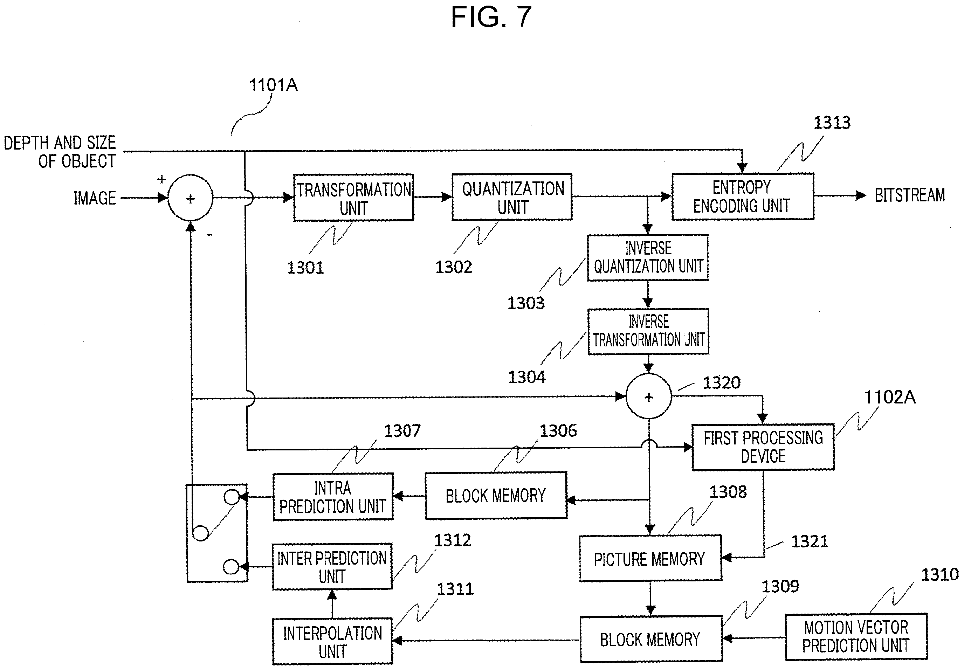

FIG. 7 is a block diagram illustrating a configuration example of the image encoding device 1101 A according to the first embodiment of the present disclosure. The image encoding device 1101A is configured to encode the input image per block and output an encoded bitstream. As illustrated in FIG. 7, the image encoding device 1101A includes a transformation unit 1301, a quantization unit 1302, an inverse quantization unit 1303, an inverse transformation unit 1304, a block memory 1306, an intra prediction unit 1307, a picture memory 1308, a block memory 1309, a motion vector prediction unit 1310, an interpolation unit 1311, an inter prediction unit 1312, and an entropy encoding unit 1313.

Next, an exemplary operation flow will be described. An input image and a predicted image are input to an adder, and an addition value corresponding to a subtraction image between the input image and the predicted image is input from the adder to the transformation unit 1301. The transformation unit 1301 inputs a frequency coefficient obtained by transforming the addition value to the quantization unit 1302. The quantization unit 1302 quantizes the input frequency coefficient and inputs the quantized frequency coefficient to the inverse quantization unit 1303 and the entropy encoding unit 1313. Further, one or more parameters including the depth and the size of an object are input to the entropy encoding unit 1313. The entropy encoding unit 1313 entropy-encodes the quantized frequency coefficient and generates a bitstream. Further, the entropy encoding unit 1313 entropy-encodes the one or more parameters including the depth and the size of the object together with the quantized frequency coefficient or stores the one or more parameters in the header of the bitstream to add the one or more parameters to the bitstream.

The inverse quantization unit 1303 inversely quantizes the frequency coefficient input from the quantization unit 1302 and inputs the frequency coefficient that has been inversely quantized to the inverse transformation unit 1304. The inverse transformation unit 1304 inversely transforms the frequency coefficient to generate a subtraction image, and inputs the subtraction image to the adder. The adder adds the subtraction image input from the inverse transformation unit 1304 and the predicted image input from the intra prediction unit 1307 or the inter prediction unit 1312. The adder inputs an addition value 1320 (corresponding to the pixel sample described above) corresponding to the input image to the first processing device 1102 A, the block memory 1306, and the picture memory 1308. The addition value 1320 is used for further prediction.

The first processing device 1102A executes at least one of the morphological transformation and edge enhancement processing such as the unsharp masking on the addition value 1320 based on at least one of the depth and the size of the object, and enhances characteristics of the object included in the input image corresponding to the addition value 1320. The first processing device 1102A executes object tracking with at least determination processing using the addition value 1320 including the enhanced object and at least one of the depth and the size of the object. The depth and the size of the object improve the accuracy and speed performance of the object tracking. Here, in addition to at least one of the depth and the size of the object, the first processing device 1102A may execute the object tracking using position information indicating the position of the object included in the image (for example, boundary information indicating a boundary surrounding the object). This further improves the accuracy of the object tracking. In this case, the entropy encoding unit 1313 allows the position information to be included in the bitstream in addition to the depth and the size of the object. A determination result 1321 is input from first processing device 1102A to the picture memory 1308, and used for further prediction. For example, object enhancement processing is executed on the input image corresponding to the addition value 1320 stored in the picture memory 1308, based on the determination result 1321, thereby improving the accuracy of the subsequent inter prediction. However, the input of the determination result 1321 to the picture memory 1308 may be omitted.

The intra prediction unit 1307 and the inter prediction unit 1312 search for an image region most similar to the input image for prediction in a reconstructed image stored in the block memory 1306 or the picture memory 1308. The block memory 1309 fetches a block of the reconstructed image from the picture memory 1308 using a motion vector input from the motion vector prediction unit 1310. The block memory 1309 inputs the block of the reconstructed image to the interpolation unit 1311 for interpolation processing. The interpolated image is input from the interpolation unit 1311 to the inter prediction unit 1312 for inter prediction processing.

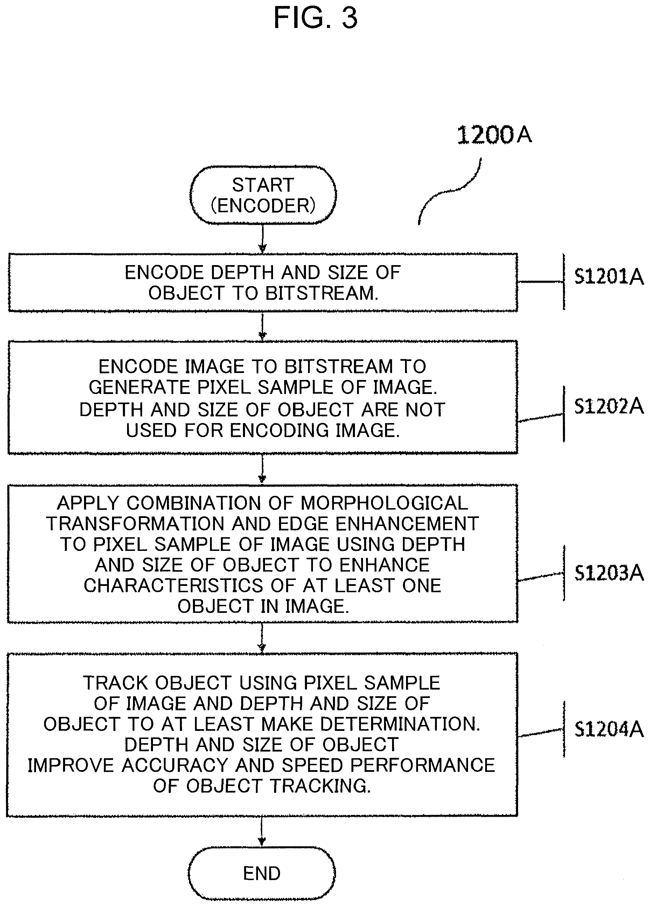

FIG. 3 is a flowchart illustrating processing 1200A of the image encoding method according to the first embodiment of the present disclosure. In a first step S1201A, the entropy encoding unit 1313 encodes the depth and the size of the object to the bitstream. The depth and the size of the object may be entropy-encoded to be added to the bitstream, or may be stored in the header of the bitstream to be added to the bitstream.

Thereafter, in step S1202A, the entropy encoding unit 1313 entropy-encodes the image to generate a bitstream, and generates a pixel sample of the image. Here, the depth and the size of the object are not used for the entropy encoding of the image. The entropy encoding unit 1313 adds the depth and the size of the object to the bitstream, and transmits, to the image decoding device 2101A, the bitstream to which the depth and the size of the object have been added.

In step S1203A, then, the first processing device 1102A executes a combination of the morphological transformation and the edge enhancement processing such as the unsharp masking on the pixel sample of the image based on the depth and the size of the object in order to enhance the characteristics of at least one object included in the image. The object enhancement processing in step S1203A improves the accuracy of the neural network task in the first processing device 1102A in next step S1204A.

In a final step S1204A, the first processing device 1102A executes the object tracking involving at least the determination processing, based on the pixel sample of the image and the depth and the size of the object. Here, the depth and the size of the object improve the accuracy and speed performance of the object tracking. The combination of the morphological transformation and the edge enhancement processing such as the unsharp masking may be replaced by another image processing technique.

### (Processing on Decoder Side)

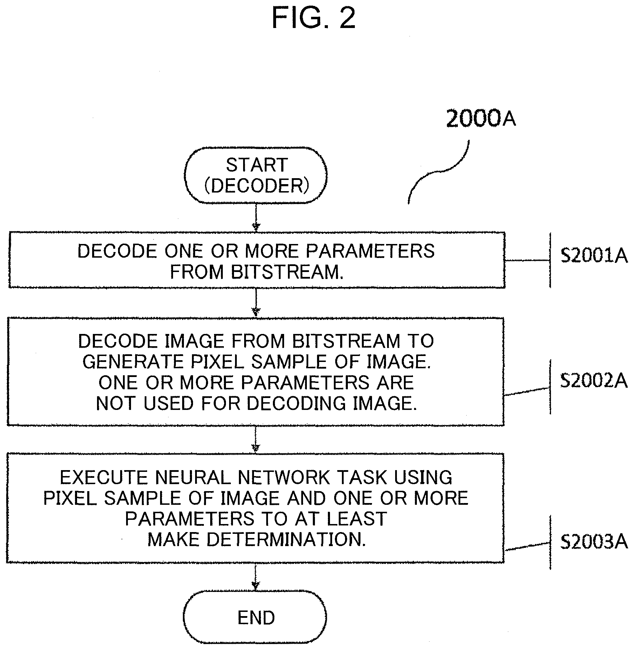

FIG. 2 is a flowchart illustrating processing 2000A of the image decoding method according to the first embodiment of the present disclosure. In a first step S2001A, the image decoding device 2101A decodes one or more parameters from a bitstream.

FIGS. 12 and 13 are diagrams illustrating examples of the camera characteristics regarding a mounting position of a fixed camera. FIGS. 27 and 28 are diagrams illustrating examples of the camera characteristics regarding the camera mounted on a moving body. FIG. 18 is a diagram illustrating an example of calculating the depth and the size of an object. FIG. 16 is a flowchart illustrating exemplary processing S4000 for determining the size of an object. FIG. 17 is a flowchart illustrating exemplary processing S4100 for determining the depth of an object. Since the processing corresponding to these figures is similar to the processing on the encoder side, redundant description will be omitted.

Next, in step S2002A, the image decoding device 2101A decodes the image from the bitstream to generate a pixel sample of the image. Here, the one or more parameters are not used for decoding the image. In addition, the image decoding device 2101A acquires the one or more parameters from the bitstream.

In a final step S2003A, the image decoding device 2101A outputs a signal 2120A including the pixel sample of the image and the one or more parameters to the second processing device 2102A.

The second processing device 2102A executes predetermined task processing similar to the processing in the first processing device 1102A using the pixel sample of the image and the one or more parameters included in the input signal 2120A. In the neural network task, at least one determination processing may be executed. An example of the neural network is a convolutional neural network. An example of the neural network task is object detection, object segmentation, object tracking, action recognition, pose estimation, pose tracking, machine and human hybrid vision, or any combination thereof.

FIG. 14 is a diagram illustrating object detection and object segmentation as examples of the neural network task. FIG. 15 is a diagram illustrating object tracking, action recognition, and pose estimation as examples of the neural network task. Since the processing corresponding to these figures is similar to the processing on the encoder side, redundant description will be omitted.

The second processing device 2102A outputs a signal 2121A indicating the execution result of the neural network task. The signal 2121A may include at least one of a number of detected objects, confidence levels of the detected objects, boundary information or position information about the detected objects, and classification categories of the detected objects. The signal 2121A may be input from the second processing device 2102A to the image decoding device 2101A.

Hereinafter, utilization examples of the one or more parameters in the second processing device 2102A will be described.

FIG. 19 is a flowchart illustrating processing S5000 of a first utilization example of the one or more parameters. FIG. 20 is a flowchart illustrating processing S5100 of a second utilization example of the one or more parameters. FIG. 21 is a flowchart illustrating processing S5200 of a third utilization example of the one or more parameters. FIG. 22 is a flowchart illustrating processing S5300 of a fourth utilization example of the one or more parameters. FIG. 23 is a flowchart illustrating processing S5400 of a fifth utilization example of the one or more parameters. FIG. 24 is a flowchart illustrating processing S5500 of a sixth utilization example of the one or more parameters. FIG. 25 is a flowchart illustrating processing S5600 of a seventh utilization example of the one or more parameters. FIG. 26 is a flowchart illustrating processing S5700 of an eighth utilization example of the one or more parameters. Since the processing corresponding to these figures is similar to the processing on the encoder side, redundant description will be omitted.

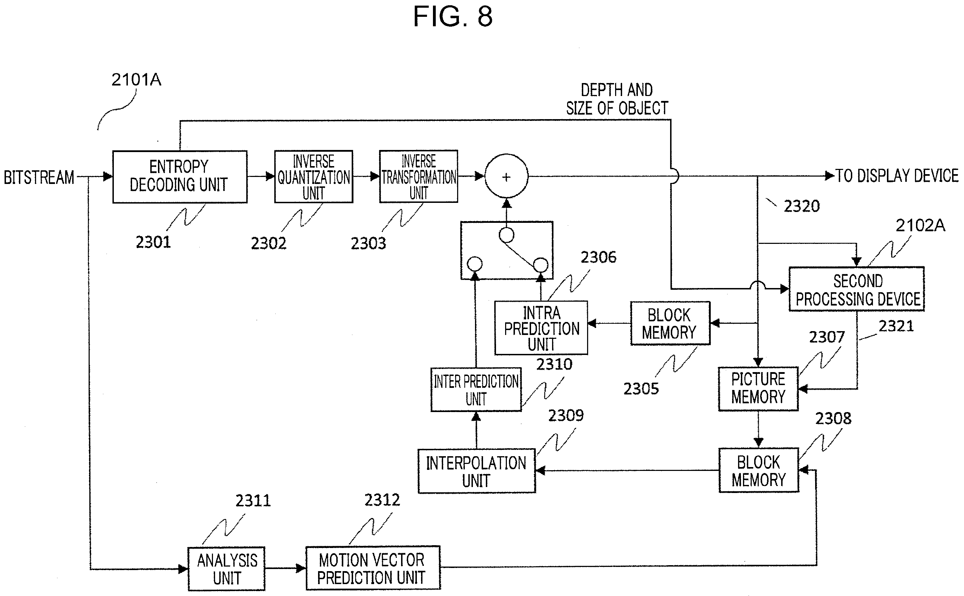

FIG. 8 is a block diagram illustrating a configuration example of the image decoding device 2101A according to the first embodiment of the present disclosure. The image decoding device 2101A is configured to decode an input bitstream per block and output a decoded image. As illustrated in FIG. 8, the image decoding device 2101A includes an entropy decoding unit 2301, an inverse quantization unit 2302, an inverse transformation unit 2303, a block memory 2305, an intra prediction unit 2306, a picture memory 2307, a block memory 2308, an interpolation unit 2309, an inter prediction unit 2310, an analysis unit 2311, and a motion vector prediction unit 2312.

Next, an exemplary operation flow will be described. The encoded bitstream input to the image decoding device 2101A is input to the entropy decoding unit 2301. The entropy decoding unit 2301 decodes the input bitstream, and inputs a frequency coefficient that is a decoded value to the inverse quantization unit 2302. Further, the entropy decoding unit 2301 acquires a depth and a size of an object from the bitstream, and inputs these pieces of information to the second processing device 2102A. The inverse quantization unit 2302 inversely quantizes the frequency coefficient input from the entropy decoding unit 2301, and inputs the frequency coefficient that has been inversely quantized to the inverse transformation unit 2303. The inverse transformation unit 2303 inversely transforms the frequency coefficient to generate a subtraction image, and inputs the subtraction image to the adder. The adder adds the subtraction image input from the inverse transformation unit 2303 and the predicted image input from the intra prediction unit 2306 or the inter prediction unit 2310. The adder inputs the addition value 2320 corresponding to the input image to the display device. As a result, the display device displays the image. In addition, the adder inputs the addition value 2320 to the second processing device 2102A, the block memory 2305, and the picture memory 2307. The addition value 2320 is used for further prediction.

The second processing device 2102A performs at least one of the morphological transformation and the edge enhancement processing such as the unsharp masking on an addition value 2320 based on at least one of the depth and the size of the object, and emphasizes characteristics of the object included in the input image corresponding to the addition value 2320. The second processing device 2102A executes object tracking involving at least determination processing using the addition value 2320 including the emphasized object and at least one of the depth and the size of the object. The depth and the size of the object improve the accuracy and speed performance of the object tracking. Here, in addition to at least one of the depth and the size of the object, the second processing device 2102A may execute the object tracking using position information indicating the position of the object included in the image (for example, boundary information indicating a boundary surrounding the object). This further improves the accuracy of the object tracking. In this case, the position information is included in the bitstream, and the entropy decoding unit 2301 acquires the position information from the bitstream. A determination result 2321 is input from second processing device 2102A to the picture memory 2307, and used for further prediction. For example, object enhancement processing is executed on the input image corresponding to the addition value 2320 stored in the picture memory 2307, based on the determination result 2321, thereby improving the accuracy of the subsequent inter prediction. However, the input of the determination result 2321 to the picture memory 2307 may be omitted.

The analysis unit 2311 parses the input bitstream to input some pieces of prediction information, such as a block of residual samples, a reference index indicating a reference picture to be used, and a delta motion vector, to the motion vector prediction unit 2312. The motion vector prediction unit 2312 predicts a motion vector of a current block based on the prediction information input from the analysis unit 2311. The motion vector prediction unit 2312 inputs a signal indicating the predicted motion vector to the block memory 2308.

The intra prediction unit 2306 and the inter prediction unit 2310 search for an image region most similar to the input image for prediction in a reconstructed image stored in the block memory 2305 or the picture memory 2307. The block memory 2308 fetches a block of the reconstructed image from the picture memory 2307 using the motion vector input from the motion vector prediction unit 2312. The block memory 2308 inputs the block of the reconstructed image to the interpolation unit 2309 for interpolation processing. The interpolated image is input from the interpolation unit 2309 to the inter prediction unit 2310 for inter prediction processing.

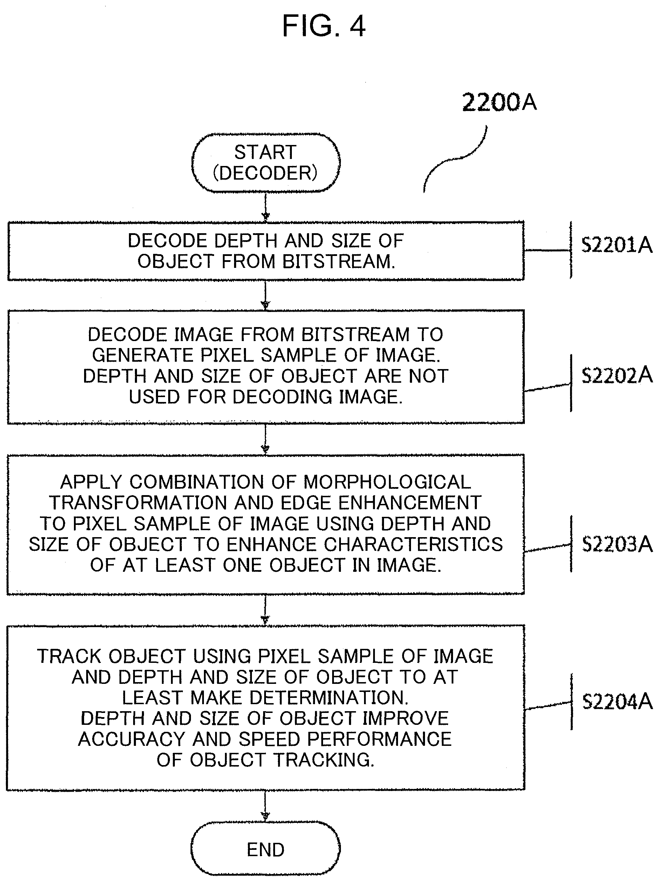

FIG. 4 is a flowchart illustrating processing 2200A of the image decoding method according to the first embodiment of the present disclosure. In a first step S2201A, the entropy decoding unit 2301 decodes the depth and the size of the object from the bitstream.

Next, in step S2202A, the entropy decoding unit 2301 entropy-decodes the image from the bitstream to generate a pixel sample of the image. Further, the entropy decoding unit 2301 acquires the depth and the size of the object from the bitstream. Here, the depth and the size of the object are not used for the entropy decoding of the image. The entropy decoding unit 2301 inputs the acquired depth and the size of the object to the second processing device 2102A.

In step S2203A, then, the second processing device 2102A executes a combination of the morphological transformation and the edge enhancement processing such as the unsharp masking on the pixel sample of the image based on the depth and the size of the object in order to enhance the characteristics of at least one object included in the image. The object enhancement processing in step S2203A improves the accuracy of the neural network task in the second processing device 2102A in next step S2204A.

In a final step S2204A, the second processing device 2102A executes the object tracking involving at least the determination processing, based on the pixel sample of the image and the depth and the size of the object. Here, the depth and the size of the object improve the accuracy and speed performance of the object tracking. The combination of the morphological transformation and the edge enhancement processing such as the unsharp masking may be replaced by another image processing technique.

According to the present embodiment, the image encoding device 1101A transmits, to the image decoding device 2101A, the one or more parameters to be output to the first processing device 1102A for execution of the predetermined task processing. As a result, the image decoding device 2101A can output the one or more parameters received from the image encoding device 1101A to the second processing device 2102A that executes task processing which is same as the predetermined task processing. As a result, the second processing device 2102A executes the predetermined task processing based on the one or more parameters input from the image decoding device 2101A, thereby improving the accuracy of the task processing in the second processing device 2102A.

### (Second Embodiment)

A second embodiment of the present disclosure describes a response in a case where a camera that outputs an image with great distortion, such as a fisheye camera, a super-wide angle camera, or an omnidirectional camera, can be used in the first embodiment will be described.

### (Processing on Encoder Side)

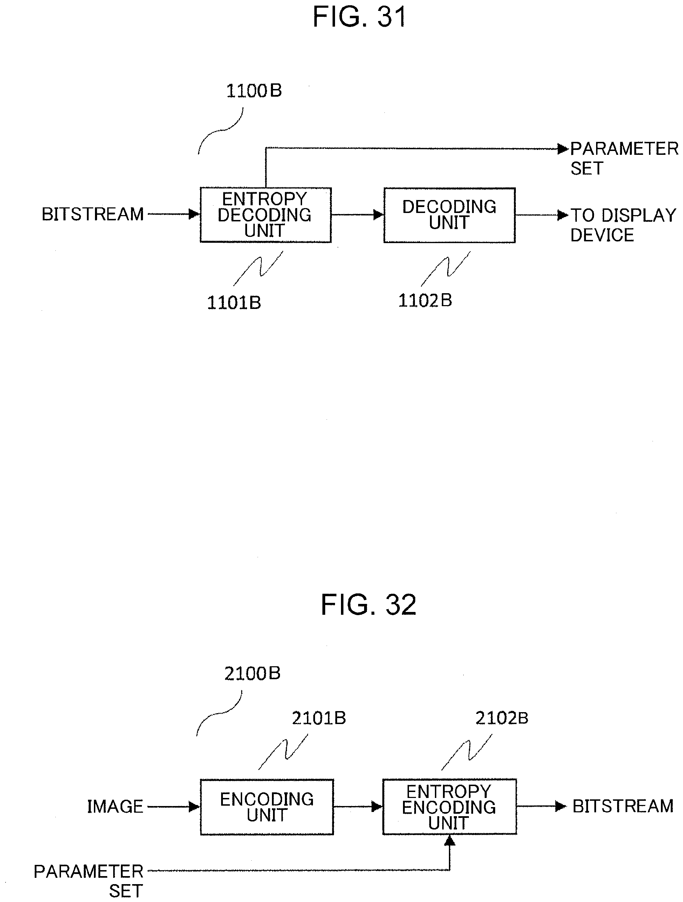

FIG. 32 is a block diagram illustrating a configuration example of an encoder 2100B according to the second embodiment of the present disclosure. The encoder 2100B includes an encoding unit 2101B and an entropy encoding unit 2102B. The entropy encoding unit 2102B corresponds to the entropy encoding unit 1313 illustrated in FIG. 7. The encoding unit 21021 corresponds to a configuration illustrated in FIG. 7 where the entropy encoding unit 1313 and the first processing device 1102A are excluded.

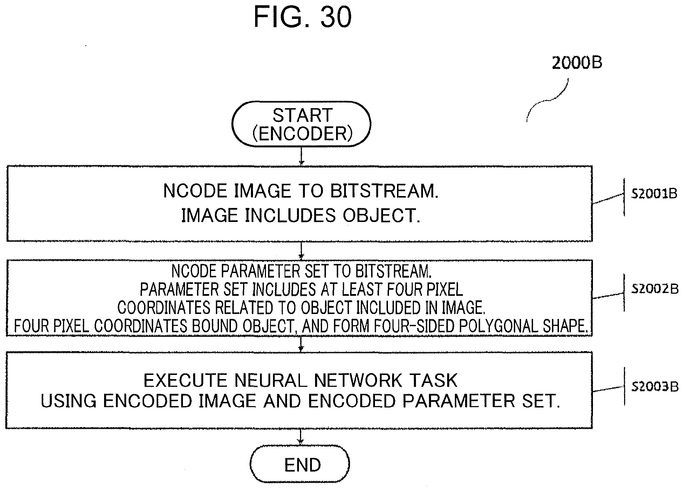

FIG. 30 is a flowchart illustrating processing 2000B of the image encoding method according to the second embodiment of the present disclosure. In a first step S2001B, the entropy encoding unit 2102B entropy-encodes an images input from the encoding unit 2101B to generate a bitstream. The image input to the encoding unit 2101B may be an image output from a camera with great distortion such as a fisheye camera, a super-wide angle camera, or an omnidirectional camera. The image includes at least one object such as a person.

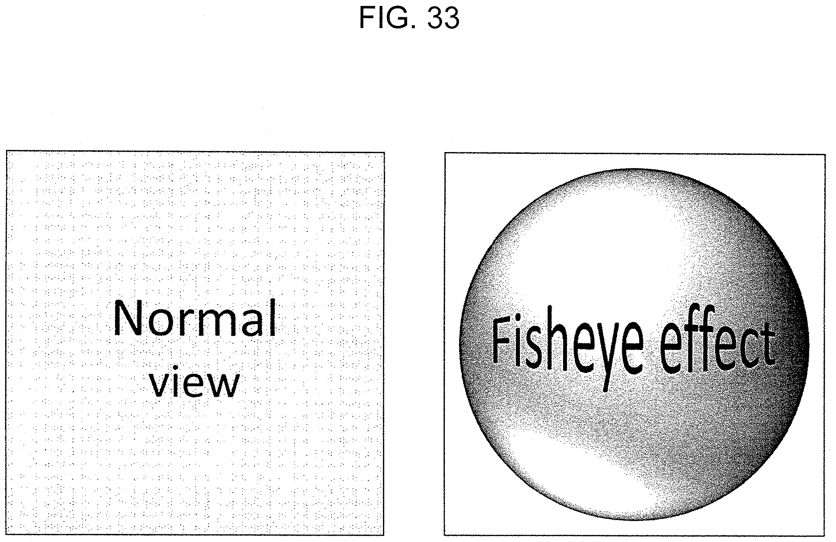

FIG. 33 is a diagram illustrating comparison between output images captured by a normal camera and the camera with great distortion. The left side illustrates an output image from the normal camera, and the right side illustrates an output image from the camera with great distortion (in this example, an omnidirectional camera).

In step S2002B, the entropy encoding unit 2102B encodes a parameter set included in the one or more parameters into a bitstream. The parameter set includes boundary information indicating a boundary surrounding the object included in the image, and distortion information indicating presence or absence of distortion in the image.

The boundary information includes position coordinates of a plurality of vertices regarding a bounding box that is a figure defining the boundary. Alternatively, the boundary information may include center coordinates, width information, height information, and tilt information regarding the bounding box. The distortion information includes additional information indicating that the image is an image captured by a fisheye camera, a super-wide angle camera, or an omnidirectional camera. The boundary information and the distortion information may be input from the camera or the sensor 3101 illustrated in FIG. 10 to the entropy encoding unit 2102B, or may be input from the pre-processing unit 3202 illustrated in FIG. 11 to the entropy encoding unit 2102B.

The parameter set may be entropy-encoded to be added to the bitstream, or may be stored in a header of the bitstream to be added to the bitstream.

The encoder 2100B transmits, to a decoder 1100B, the bitstream to which the parameter set has been added.

In a final step S2003B, the entropy encoding unit 2102B outputs the image and the parameter set to the first processing device 1102A. The first processing device 1102A executes predetermined task processing such as a neural network task using the input image and the parameter set. In the neural network task, at least one determination processing may be executed. The first processing device 1102A may switch between a machine learning model for a greatly distorted image and a machine learning model for a normal image with small distortion depending on whether the additional information is included in the distortion information in the parameter set.

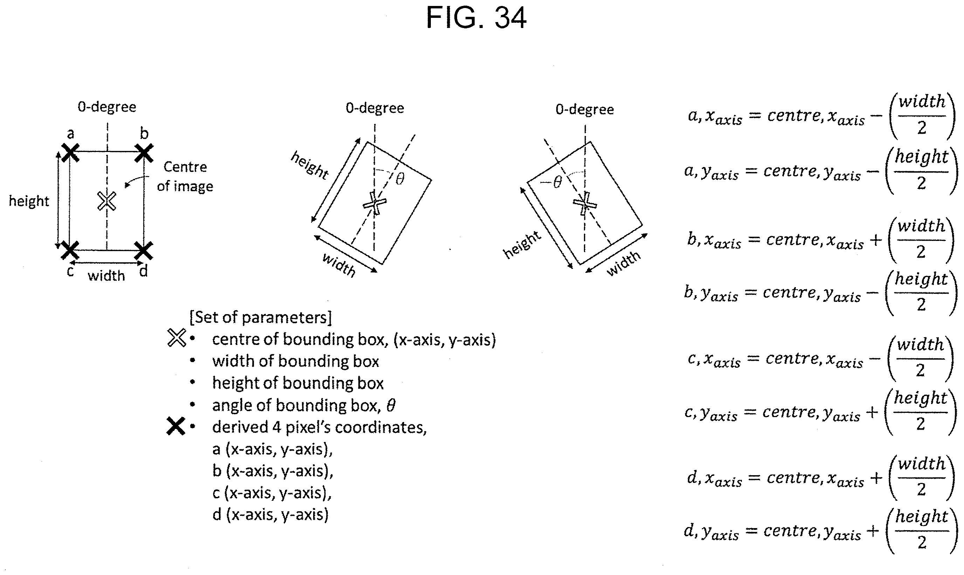

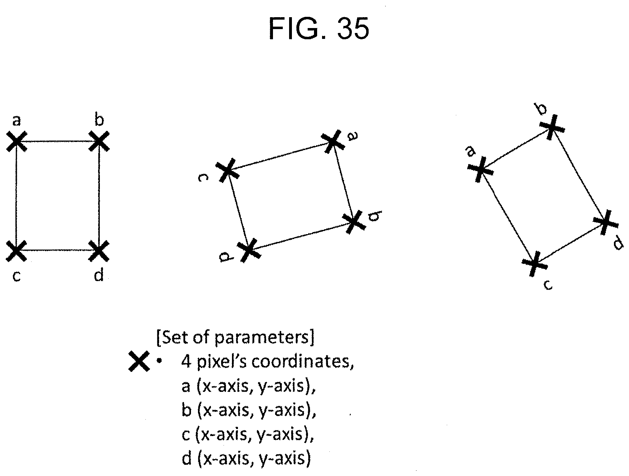

FIGS. 34 to 37 are diagrams illustrating examples of boundary information. With reference to FIGS. 34 and 35, the boundary information includes position coordinates of a plurality of vertices of a bounding box. In a case where the bounding box is defined by a quadrangle, the boundary information includes four pixel coordinates (x coordinate and y coordinate) indicating positions of pixels corresponding to four vertices a to d. The four pixel coordinates bound the object, and the four pixel coordinates form a four-sided polygonal shape.

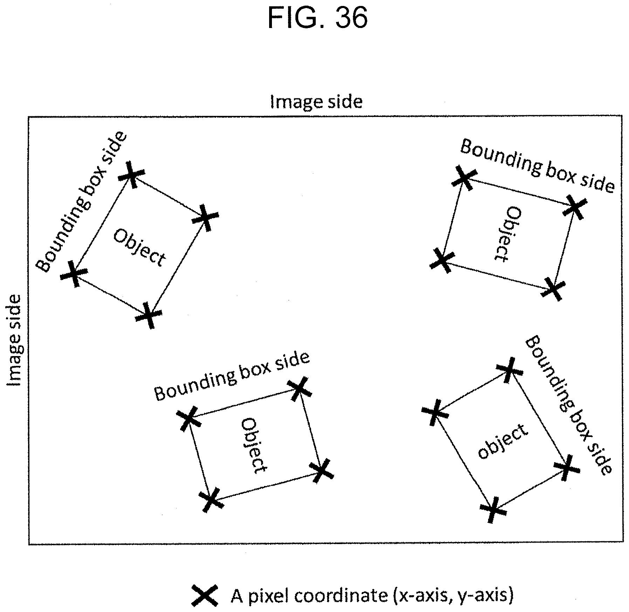

As illustrated in FIG. 36, the image includes a plurality of objects, and thus a plurality of bounding boxes may be defined. In addition, since the bounding box tilts due to the distortion of the image or the like, the side (left side or right side) of the bounding box and the side of the screen may not be parallel.

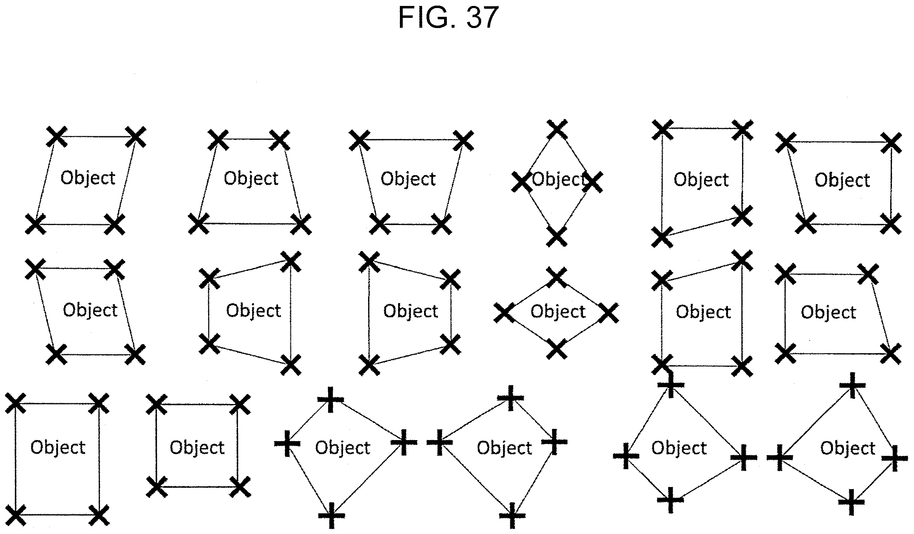

As illustrated in FIG. 37, the shape of the bounding box is not limited to a rectangle, and may be a square, a parallelogram, a trapezoid, a rhombus, or the like. Further, since the outer shape of the object is distorted due to the distortion of the image or the like, the shape of the bounding box may be any trapezium.

Furthermore, with reference to FIG. 34, the boundary information may include center coordinates (x coordinate and y coordinate), width information (width), height information (height), and tilt information (angle θ) regarding the bounding box. In a case where the bounding box has a rectangular shape, four pixel coordinates corresponding to the four vertices a to d can be calculated based on the center coordinates, the width information, and the height information by using an approximate expression illustrated in FIG. 34.

### (Processing on Decoder Side)

FIG. 31 is a block diagram illustrating a configuration example of the decoder 1100B according to the second embodiment of the present disclosure. The decoder 1100B includes an entropy decoding unit 1101B and a decoding unit 1102B. The entropy decoding unit 1101B corresponds to the entropy decoding unit 2301 illustrated in FIG. 8. The decoding unit 1102B corresponds to a configuration illustrated in FIG. 8 where the entropy decoding unit 2301 and the second processing device 2102A are excluded.

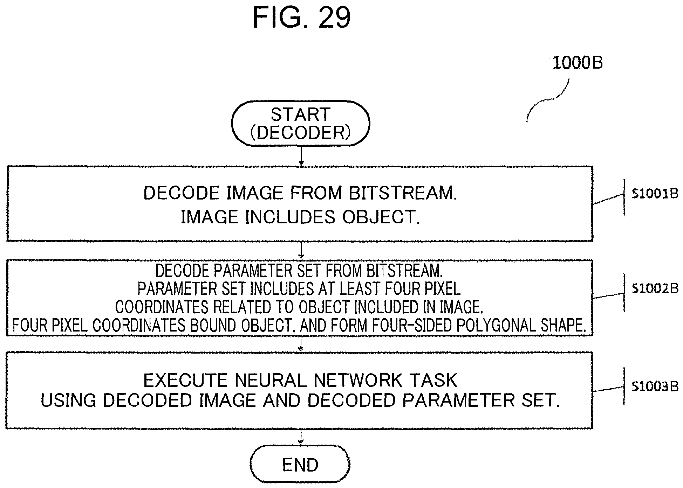

FIG. 29 is a flowchart illustrating processing 1000B of the image decoding method according to the second embodiment of the present disclosure. In a first step S1001B, the entropy decoding unit 1101B decodes an image from the bitstream received from the encoder 2100B. The image includes at least one object such as a person.

In next step S1002B, the entropy decoding unit 1101B decodes a parameter set from the bitstream received from the encoder 2100B. The parameter set includes boundary information indicating a boundary surrounding the object included in the image, and distortion information indicating presence or absence of distortion in the image.

In a final step S1003B, the entropy decoding unit 1101B outputs the decoded image and the parameter set to the second processing device 2102A. The second processing device 2102A executes predetermined task processing which is same as the task in the first processing device 1102A using the input image and the parameter set. In the neural network task, at least one determination processing may be executed. The second processing device 2102A may switch between a machine learning model for a greatly distorted image and a machine learning model for a normal image with small distortion depending on whether the additional information is included in the distortion information in the parameter set.

According to the present embodiment, even in a case where a camera that outputs a greatly distorted image, such as a fisheye camera, a super-wide angle camera, or an omnidirectional camera, is used, the bounding box surrounding the object can be accurately defined. Further, the encoder 2100B transmits a parameter set including the boundary information and the distortion information to the decoder 1100B. As a result, the decoder 1100B can output the parameter set received from the encoder 2100B to the second processing device 2102A. As a result, the second processing device 2102A executes the predetermined task processing based on the input parameter set, thereby improving the accuracy of the task processing in the second processing device 2102A.

### Industrial Applicability

The present disclosure is particularly useful for application to an image processing system including an encoder that transmits an image and a decoder that receives the image.

## Claims

1. An image encoding method comprising:
by an image encoding device,
encoding an image to generate a bitstream;
adding, to the bitstream, one or more parameters that are not used for encoding the image;
transmitting, to an image decoding device, the bitstream to which the one or more parameters have been added; and
outputting the image and the one or more parameters to a first processing device that executes predetermined task processing.

2. The image encoding method according to claim 1, wherein the image decoding device receives the bitstream from the image encoding device, and outputs the image and the one or more parameters to a second processing device that executes task processing which is same as to the predetermined task processing.

3. The image encoding method according to claim 2, wherein the first processing device and the second processing device switch at least one of a machine learning model, a detection threshold, a scaling value, and a post-processing method based on the one or more parameters when executing the predetermined task processing.

4. The image encoding method according to any one of claims 1 to 3, wherein the predetermined task processing includes at least one of object detection, object segmentation, object tracking, action recognition, pose estimation, pose tracking, and hybrid vision.

5. The image encoding method according to any one of claims 1 to 4, wherein the predetermined task processing includes image processing for improving image quality or image resolution of the image.

6. The image encoding method according to claim 5, wherein the image processing includes at least one of morphological transformation and edge enhancement processing for enhancing an object included in the image.

7. The image encoding method according to any one of claims 1 to 6, wherein the one or more parameters include at least one of a mounting height of a camera that outputs the image, a tilt angle of the camera, a distance from the camera to a region of interest, and a visual field of the camera.

8. The image encoding method according to any one of claims 1 to 7, wherein the one or more parameters include at least one of a depth and a size of the object included in the image.

9. The image encoding method according to any one of claims 1 to 8, wherein the one or more parameters include boundary information indicating a boundary surrounding the object included in the image, and distortion information indicating presence or absence of distortion in the image.

10. The image encoding method according to claim 9, wherein the boundary information includes position coordinates of a plurality of vertices related to a figure defining the boundary.

11. The image encoding method according to claim 9, wherein the boundary information includes center coordinates, width information, height information, and tilt information related to a figure defining the boundary.

12. The image encoding method according to any one of claims 9 to 11, wherein the distortion information includes additional information indicating that the image is an image captured by a fisheye camera, a super-wide angle camera, or an omnidirectional camera.

13. An image decoding method comprising:
by an image decoding device,
receiving a bitstream from an image encoding device;
decoding an image from the bitstream;
obtaining, from the bitstream, one or more parameters that are not used for decoding the image; and
outputting the image and the one or more parameters to a processing device that executes predetermined task processing.

14. An image processing method comprising:
by an image decoding device,
receiving, from an image encoding device, a bitstream including an encoded image and one or more parameters that are not used for encoding the image;
obtaining the one or more parameters from the bitstream; and outputting the one or more parameters to a processing device that executes predetermined task processing.

15. An image encoding device that
encodes an image to generate a bitstream,
adds one or more parameters that are not used for encoding the image to the bitstream, transmits, to an image decoding device, the bitstream to which the one or more parameters have been added, and
outputs the image and the one or more parameters to a first processing device that executes predetermined task processing.

16. An image decoding device that
receives a bitstream from an image encoding device,
decodes an image from the bitstream,
obtains, from the bitstream, one or more parameters that are not used for decoding the image, and
outputs the image and the one or more parameters to a processing device that executes predetermined task processing.
